# FASCICULE DE BREVET EUROPEEN

(11) **EP 2 844 538 B1**
(45) Date de publication et mention de la délivrance du brevet: **08.02.2017**
(21) Numéro de dépôt: 13723878.8
(22) Date de dépôt: 26.04.2013
(51) Int. Cl.: B62D 21/09

(54) **LONGERON D'UNE STRUCTURE DE SOUBASSEMENT D'UN VÉHICULE AUTOMOBILE ET VÉHICULE AUTOMOBILE COMPORTANT UN TEL LONGERON**
TRÄGER DER UNTERBODENSTRUKTUR EINES KRAFTFAHRZEUGS SOWIE KRAFTFAHRZEUG MIT SOLCH EINEM TRÄGER
BEAM OF A MOTOR VEHICLE UNDERBODY STRUCTURE AND MOTOR VEHICLE COMPRISING SUCH A BEAM

(30) Priorité: 03.05.2012 FR 1254067
(43) Date de publication de la demande: 11.03.2015
(73) Titulaire: Renault S.A.S., 92100 Boulogne-Billancourt (FR)
(72) Inventeur: LEFEBVRE, Benjamin, F-91470 Les Molieres (FR)
(86) Numéro de dépôt international: PCT/FR2013/050929
(87) Numéro de publication internationale: WO 2013/164534

(56) Documents cités:
- DE-A1- 19 637 241
- DE-A1-102007 019 699
- DE-U1-202006 001 947
- US-A1- 2006 097 533
- US-A1- 2009 060 675

## Description

### Domaine technique de l'invention

L'invention concerne une structure de soubassement d'un véhicule automobile, destinée à résister à différentes sollicitations et tests d'endurance.

L'invention concerne plus particulièrement un longeron d'une structure de soubassement d'un véhicule automobile, comportant un support d'entretoise amortisseur agencé dans le longeron et destiné à coopérer avec une entretoise amortisseur traversant le longeron.

L'invention concerné également un véhicule automobile comportant un tel longeron.

### Etat de la technique

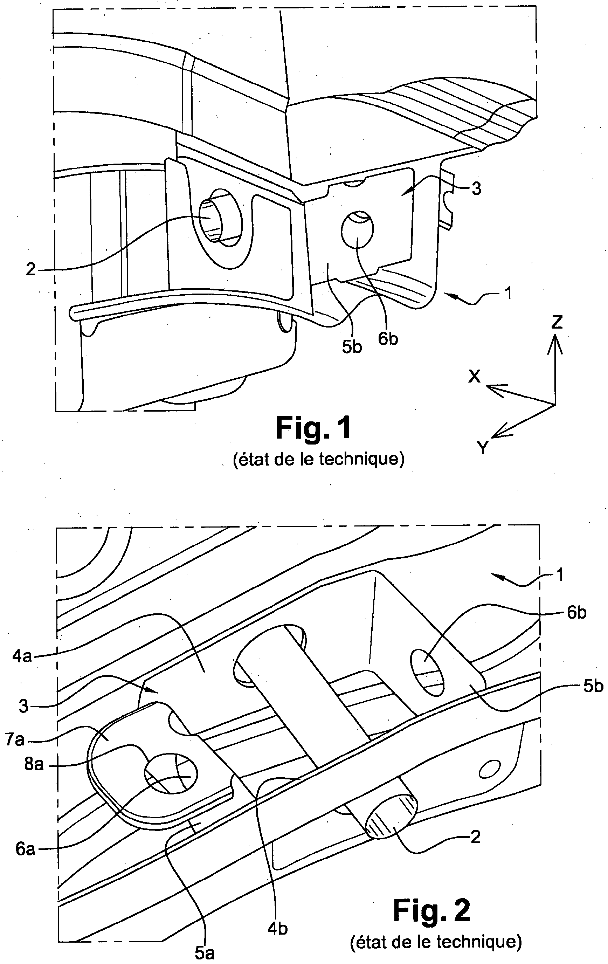

Dans une structure de soubassement d'un véhicule automobile, un amortisseur est classiquement lié à un longeron. Comme représenté plus particulièrement sur la figure 1, un longeron 1 comporte, dans une zone prédéfinie, une entretoise d'amortisseur 2, traversant le longeron 1 et un support d'entretoise 3, agencé à l'intérieur du longeron 1 et destiné notamment à supporter l'entretoise 2.

Comme représenté plus particulièrement sur la figure 2, le support d'entretoise 3 est une plaque plane pliée, de sorte à se fixer sur les parois intérieures du longeron 1, lequel présente sensiblement une section ouverte en U. Notamment, le support d'entretoise 3 comporte au moins des premières parois 4a, 4b longitudinales, c'est-à-dire orientées selon l'axe longitudinal X et solidaires des parois du longeron 1, par exemple par points de soudures ou cordons de soudure. Ces premières parois 4a, 4b sont percées de sorte à laisser passer l'entretoise 2. Le support d'entretoise 3 comporte également des secondes parois transversales 5a, 5b, sensiblement perpendiculaires aux premières parois 4a, 4b et orientées transversalement à l'intérieur du longeron 1. Avantageusement, les deux parois transversales 5a, 5b sont percées sensiblement en leur centre par un orifice 6a, 6b correspondant, notamment pour permettre la circulation de la cataphorèse dans le longeron 1 et éviter la corrosion. Par ailleurs, une des parois transversales du support d'entretoise 3, plus particulièrement la paroi transversale 5a sur la figure 2, est prolongée par une surface, ou paroi, horizontale 7a, munie d'un orifice 8a destiné notamment à former un point d'ancrage pour un système de ceinture de sécurité.

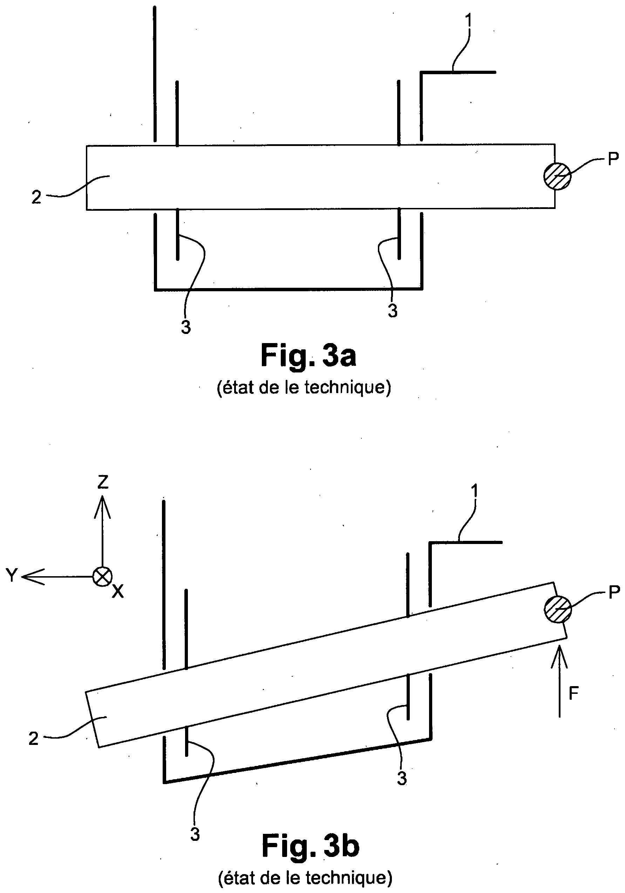

Toutefois, comme représenté sur les figures 3a et 3b, lors de tests spécifiques appliqués sur le véhicule automobile et sa structure de soubassement, par exemple des tests d'endurance, des fissures peuvent apparaître au niveau du longeron 1, ce qui n'est absolument pas recommandé, dans la mesure où de tels problèmes peuvent entraîner le report de commercialisation d'un véhicule. C'est notamment le cas lors d'essais appelés « essai de gond » de l'amortisseur, où un moment est appliqué autour de l'axe longitudinal X au niveau du point de fixation P de l'amortisseur (figure 3b), comme représenté sur la figure 3a où le longeron 1 est en position de repos avant sollicitation, entraînant une mise en parallélogramme de la section de longeron 1, comme représenté sur la figure 3b. En effet, de par ce moment et la force F de poussée engendrée par l'amortisseur, selon la flèche F sur la figure 3b, les parois du longeron 1 et du support d'entretoise 3 se sont déformées, de sorte à former sensiblement un parallélogramme, comme représenté sur la figure 3b. Une telle déformation est notamment due au fait que la section considérée possède une très faible inertie, à savoir au niveau de la face arrière 5b du support entretoise 3, qui n'est pas assez rigide et qui représente la zone la plus marquée et la plus sollicitante au niveau du longeron.

Afin de répondre à ce problème, des solutions de renfort de longeron sont bien connus, notamment par le document US 2006/0097533 et DE 2006 001947U qui divulgue un dispositif de renfort sous la forme d'une plaque carrée formant un couple de renfort. La plaque possède trois bords repliés afin d'être liée aux trois faces d'un longeron dans lequel il est agencé. Toutefois, cette solution de renfort se suffit à elle-même, c'est-à-dire que toutes les faces du longeron sont liées pour obtenir le renfort, ce qui engendre d'autres contraintes. Cette solution s'avère également non compatible selon la zone sur laquelle il est nécessaire d'agencer un tel support, notamment avec la présence du point d'ancrage ceinture 8a qui empêche d'utiliser ce type de solution.

### Objet de l'invention

L'invention a pour but de remédier à l'ensemble des inconvénients précités et a pour objet la réalisation d'un longeron d'une structure de soubassement d'un véhicule automobile qui puisse répondre à tout type de sollicitation et de test d'endurance, tout en étant simple de conception et ne nécessitant pas de modifications structurelles importantes des pièces environnantes.

Cet objet de l'invention est caractérisé, plus particulièrement, par le fait que le longeron comporte un dispositif de renfort agencé à l'intérieur du longeron, lié au support d'entretoise par des premiers moyens de fixation indémontables et lié au longeron par des seconds moyens de fixation indémontables, uniquement au niveau d'un bord inférieur du dispositif de renfort.

Ce dispositif de renfort de structure très simple permet ainsi de façon simple et peu coûteuse de renforcer le longeron suffisamment afin qu'il puisse répondre à tous les critères de sécurité.

D'autres avantages et caractéristiques de l'invention peuvent être considérés isolément ou en combinaison :
- Lesdits seconds moyens de fixation peuvent comporter un cordon de soudure, orienté transversalement par rapport au longeron, de sorte que le longeron et le dispositif de renfort sont solidarisés selon un axe vertical.
- Lesdits premiers moyens de fixation peuvent comporter une pluralité de points de soudure, par exemple cinq points de soudures, répartis sur une surface verticale du dispositif de renfort en contact avec une surface verticale du support d'entretoise, de sorte que le dispositif de renfort et le support d'entretoise sont solidarisés selon un axe longitudinal.
- Le dispositif de renfort peut être une plaque métallique sensiblement plane, épousant sensiblement la forme et les dimensions intérieures du longeron, et réalisée dans un même matériau et avec une même épaisseur que le support d'entretoise, par exemple de l'ordre de 1,8mm.
- Le longeron peut constituer un longeron arrière du véhicule automobile ou peut constituer un longeron avant du véhicule automobile.

L'invention a également pour objet la réalisation d'un véhicule automobile qui puisse répondre aux différents tests de sécurité, d'endurance, etc.

Cet objet de l'invention est caractérisé plus particulièrement par un véhicule automobile comportant au moins un tel longeron.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
La figure 1 représente une vue en coupe et en perspective d'un longeron selon l'art antérieur, au niveau d'une zone d'un support d'entretoise pour amortisseur agencé dans le longeron.
La figure 2 est une vue de détails illustrant le support d'entretoise agencé à l'intérieur du longeron selon la figure 1.
La figure 3a représente très schématiquement une vue en coupe du longeron selon les figures 1 et 2, avant toute sollicitation pour des tests, notamment d'endurance.
La figure 3b représente très schématiquement une vue en coupe du longeron selon la figure 3a, pendant et après sollicitions et déformation du longeron.
La figure 4 représente une vue en coupe et en perspective d'un mode particulier de réalisation d'un longeron selon l'invention, muni d'un dispositif de renfort au niveau d'une zone d'un support d'entretoise pour amortisseur agencé dans le longeron.
La figure 5 représente très schématiquement une vue en coupe du longeron selon la figure 4, après sollicitations pour des tests, notamment d'endurance.

### Description de modes particuliers de réalisation

Dans la description qui va suivre, des éléments identiques ou analogues porteront les mêmes chiffres et nombres de référence. Les expressions telles que « arrière » et « avant », « gauche » et « droite », « supérieur » et « inférieur» et les orientations « longitudinale », «transversale» et « verticale » seront définies en référence au trièdre X, Y, Z représenté sur les figures 1 à 5 et aux définitions données dans la description. Notamment, la direction longitudinale X correspond au sens de déplacement en marche avant d'un véhicule automobile (non représenté sur les figures pour des raisons de clarté).

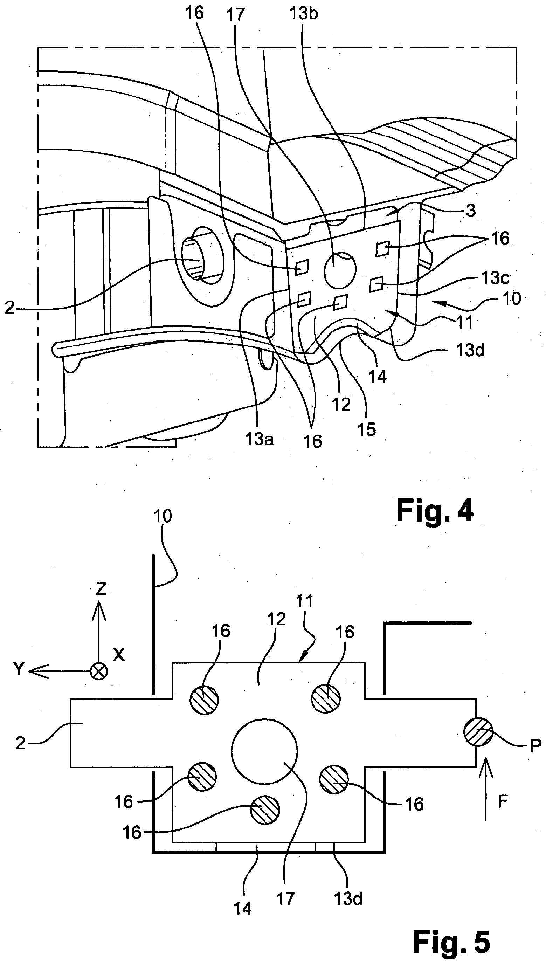

Sur les figures 4 et 5, le longeron 10 selon l'invention comprend une plaque de renfort 11 agencée à l'intérieur du longeron 10 et liée au support d'entretoise 3 et au longeron 10, afin d'empêcher toute déformation, notamment une mise en parallélogramme comme dans l'art antérieur, du longeron 10 en cas de sollicitations, lors de tests de sécurité, notamment des tests d'endurance.

Sur la figure 4, la plaque de renfort 11 est conformée de sorte à s'adapter sensiblement à la forme intérieure du longeron 10. La plaque de renfort 11 est constituée, de préférence, d'une unique plaque formant une surface verticale 12, orientée sensiblement perpendiculairement au longeron 10 et délimitée par quatre bords 13, deux bords verticaux 13a, 13c et deux bords horizontaux 13b et 13d. La plaque de renfort 11 est avantageusement liée au support d'entretoise 3, plus particulièrement à la paroi transversale 5b du support d'entretoise 3, par des premiers moyens de liaison indémontables et au longeron 10 par des seconds moyens de liaison indémontables, uniquement au niveau de son bord horizontal inférieur 13d.

Comme représenté plus particulièrement sur la figure 5, la plaque de renfort 11 est liée au longeron 10, de préférence, par un cordon de soudure 14, reliant uniquement le bord horizontal inférieur 13d au longeron 10. Un tel cordon de soudure 14 permet ainsi de relier le longeron 10 à la plaque de renfort 11 selon un axe vertical Z, c'èst-à-dire de sorte que l'orientation de la fixation empêche tout degré de liberté, ou mouvement relatif, entre les deux pièces liées selon cet axe vertical Z.

Comme représenté plus particulièrement sur la figure 4, le cordon de soudure 14 est réalisé, par exemple, uniquement autour d'un arrondi 15, ou empreinte, formé sur la surface inférieure du longeron 10, de sorte à ne pas s'étendre sur la totalité du bord inférieur 13d de la plaque 11. D'une façon générale, le cordon de soudure 14 peut être réalisé sur toute la longueur du bord inférieur 13d de la plaque 11.

De même, comme représenté plus particulièrement sur la figure 5, la plaque de renfort 11 est liée au support d'entretoise 3, de préférence, par des points de soudure 16, reliant la plaque de renfort 11 au support d'entretoise 3, plus particulièrement à la paroi transversale 5b du support d'entretoise 3. De tels points de soudure 16 permettent ainsi de relier la plaque de renfort 11 au support d'entretoise 3 selon un axe longitudinal X, c'est-à-dire de sorte que l'orientation de la fixation empêche tout degré de liberté, ou mouvement relatif, entre les deux pièces liées selon cet axe longitudinal X.

Comme représenté plus particulièrement sur la figure 5, la plaque de renfort 11 est liée, de préférence, par cinq points de soudure 16 répartis sur la surface verticale 12 de la plaque 11 et autour d'un orifice 17, percé dans la plaque de renfort 11 et destiné à coopérer avec l'orifice 6b percé dans la paroi 5b associée du support d'entretoise 3. Un tel orifice 17 formé sensiblement au niveau d'une zone centrale de la plaque de renfort 11 permet notamment de laisser circuler la cataphorèse dans le longeron 10. D'une façon générale, il est possible de prévoir plus ou moins de points de soudure 16, selon les dimensions de la plaque de renfort 11 et du longeron 10 associé.

A titre d'exemple, la plaque de renfort 11 est une plaque métallique réalisée en un même matériau que le support d'entretoise 3 et avec une même épaisseur, de préférence de l'ordre de 1,8mm.

En référence à la figure 5, l'application des tests d'endurance, en plus de la force F engendrée par la présence de l'amortisseur, n'entraîne ainsi aucune déformation, notamment mise en parallélogramme, grâce à la plaque de renfort 11 agencée dans le longeron 10 et liée uniquement à lui par son bord inférieur 13d et au support d'entretoise 3 par sa surface verticale 12. Cela permet également de limiter très nettement les contraintes au niveau de la zone du support d'entretoise 3.

Ainsi, quel que soit le mode de réalisation du longeron 10 selon l'invention, la présence d'une telle plaque 11, faisant office de dispositif de renfort, permet d'éviter toute fissure du longeron lors de sollicitations et de tests d'endurance.

Par ailleurs, la plaque de renfort 11 vient se lier selon l'axe longitudinal X sur le support d'entretoise 3 dans le longeron 10, sans entraîner de modifications structurelles de ce support. La plaque n'est liée qu'au fond du longeron 10 et c'est le support d'entretoise 3 qui lie les deux faces verticales du longeron 10, sans modifications de pièces existantes et en s'intégrant parfaitement dans l'environnement standard de la zone de l'entretoise d'amortisseur 2.

L'invention n'est pas limitée au mode de réalisation décrit ci-dessus. Notamment, la forme et les dimensions de la plaque de renfort 11 peuvent être différentes, tant que le longeron 10 comporte un dispositif de renfort 11 lié uniquement par son bord inférieur au longeron 10 et tant qu'un tel dispositif de renfort permet d'éviter toute déformation du longeron.

Par ailleurs, les moyens de liaison indémontrable peuvent être différents en type et en nombre, tant qu'ils permettent une bonne liaison de la plaque de renfort 11 au longeron 10 et de la plaque de renfort 11 au support d'entretoise 3.

L'invention s'applique plus particulièrement à tout type de véhicule automobile, dont les longerons de la structure de soubassement doivent être renforcés pour éviter une mise en parallélogramme. Un tel longeron 10 équipé d'un tel dispositif de renfort peut avantageusement être agencé à l'avant ou l'arrière du véhicule automobile. Dans le cas d'un agencement sur un longeron avant, un tel support d'entretoise permet alors, par exemple, la fixation d'un berceau ou de toute autre pièce nécessitant un renfort.

## Revendications

1. Longeron (10) d'une structure de soubassement d'un véhicule automobile, comportant un support (3) d'entretoise d'amortisseur (2) agencé dans le longeron (10) et coopérant avec une entretoise d'amortisseur (2) traversant le longeron (10),
**caractérisé en ce qu'il** comporte un dispositif de renfort (11) agencé à l'intérieur du longeron (10), lié au support d'entretoise (3) par des premiers moyens de fixation (16) indémontables et lié au longeron (10) par des seconds moyens de fixation (14) indémontables, uniquement au niveau d'un bord inférieur (13d) du dispositif de renfort (11).

2. Longeron (10) selon la revendication précédente, **caractérisé en ce que** lesdits seconds moyens de fixation comportent un cordon de soudure (14), orienté transversalement par rapport au longeron (10), de sorte que le longeron (10) et le dispositif de renfort (11) sont solidarisés selon un axe vertical (Z).

3. Longeron (10) selon l'une des revendications précédentes, **caractérisé en ce que** lesdits premiers moyens de fixation comportent une pluralité de points de soudure (16), répartis sur une surface verticale (12) du dispositif de renfort (11) en contact avec une surface verticale (5b) du support d'entretoise (3), de sorte que le dispositif de renfort (10) et le support d'entretoise (3) sont solidarisés selon un axe longitudinal (X).

4. Longeron (10) selon la revendication précédente, **caractérisé en ce que** lesdits premiers moyens de fixation comportent cinq points de soudure (16).

5. Longeron (10) selon l'une quelconque des revendications précédentes, **caractérisé en ce que** le dispositif de renfort est une plaque (11) métallique sensiblement plane, épousant sensiblement la forme et les dimensions intérieures du longeron (10).

6. Longeron (10) selon la revendication précédente, caractérisé en que la plaque (11) est réalisée dans un même matériau et a une même épaisseur que le support d'entretoise (3).

7. Longeron (10) selon la revendication précédente, **caractérisé en ce que** l'épaisseur de la plaque (11) est de l'ordre de 1,8mm.

8. Longeron (10) selon l'une quelconque des revendications précédentes, **caractérisé en ce qu'**il constitue un longeron arrière du véhicule automobile.

9. Longeron selon l'une quelconque des revendications précédentes, **caractérisé en ce qu'**il constitue un longeron avant du véhicule automobile.

10. Véhicule automobile comportant au moins un longeron (10) selon l'une quelconque des revendications précédentes.

## Patentansprüche

1. Längsträger (10) einer Unterbodenstruktur eines Kraftfahrzeugs, der einen Träger (3) eines Dämpfer-Distanzrohrs (2) aufweist, der im Längsträger (10) angeordnet ist und mit einem Dämpfer-Distanzrohr (2) zusammenwirkt, das den Längsträger (10) durchquert,
**dadurch gekennzeichnet, dass** er eine Verstärkungsvorrichtung (11) aufweist, die innerhalb des Längsträgers (10) angeordnet ist, verbunden mit dem Distanzrohrträger (3) über erste nicht ausbaubare Befestigungseinrichtungen (16) und verbunden mit dem Längsträger (10) über zweite nicht ausbaubare Befestigungseinrichtungen (14), nur im Bereich eines unteren Rands (13d) der Verstärkungsvorrichtung (11).

2. Längsträger (10) nach dem vorhergehenden Anspruch, **dadurch gekennzeichnet, dass** die zweiten Befestigungseinrichtungen eine Schweißnaht (14) aufweisen, die bezüglich des Längsträgers (10) quer ausgerichtet ist, so dass der Längsträger (10) und die Verstärkungsvorrichtung (11) gemäß einer senkrechten Achse (Z) fest miteinander verbunden sind.

3. Längsträger (10) nach einem der vorhergehenden Ansprüche, **dadurch gekennzeichnet, dass** die ersten Befestigungseinrichtungen eine Vielzahl von Schweißpunkten (16) aufweisen, die auf einer senkrechten Fläche (12) der Verstärkungsvorrichtung (11) in Kontakt mit einer senkrechten Fläche (5b) des Distanzrohrträgers (3) verteilt sind, so dass die Verstärkungsvorrichtung (10) und der Distanzrohrträger (3) gemäß einer Längsachse (X) fest miteinander verbunden sind.

4. Längsträger (10) nach dem vorhergehenden Anspruch, **dadurch gekennzeichnet, dass** die ersten Befestigungseinrichtungen fünf Schweißpunkte (16) aufweisen.

5. Längsträger (10) nach einem der vorhergehenden Ansprüche, **dadurch gekennzeichnet, dass** die Verstärkungsvorrichtung eine im Wesentlichen ebene Metallplatte (11) ist, die sich im Wesentlichen an die Form und die Innenabmessungen des Längsträgers (10) anpasst.

6. Längsträger (10) nach dem vorhergehenden Anspruch, **dadurch gekennzeichnet, dass** die Platte (11) aus dem gleichen Material und mit der gleichen Dicke wie der Distanzrohrträger (3) hergestellt ist.

7. Längsträger (10) nach dem vorhergehenden Anspruch, **dadurch gekennzeichnet, dass** die Dicke der Platte (11) in der Größenordnung von 1,8 mm liegt.

8. Längsträger (10) nach einem der vorhergehenden Ansprüche, **dadurch gekennzeichnet, dass** er einen hinteren Längsträger des Kraftfahrzeugs bildet.

9. Längsträger nach einem der vorhergehenden Ansprüche, **dadurch gekennzeichnet, dass** er einen vorderen Längsträger des Kraftfahrzeugs bildet.

10. Kraftfahrzeug, das mindestens einen Längsträger (10) nach einem der vorhergehenden Ansprüche aufweist.

## Claims

1. Beam (10) of a motor vehicle underbody structure comprising an impact-absorbing strut (2) support (3) arranged in the beam (10) and collaborating with an impact-absorbing strut (2) that passes through the beam (10),
**characterized in that** it comprises a reinforcing device (11) arranged inside the beam (10), connected to the strut support (3) by non-dissociable first fixing means (16) and connected to the beam (10) by non-dissociable second fixing means (14) only along a lower edge (13d) of the reinforcing device (11).

2. Beam (10) according to the preceding claim,
**characterized in that** said second fixing means comprise a bead of welding (14) oriented transversely with respect to the beam (10) so that the beam (10) and the reinforcing device (11) are secured along a vertical axis (Z).

3. Beam (10) according to either of the preceding claims,
**characterized in that** said first fixing means comprise a plurality of spot welds (16) distributed over a vertical surface (12) of the reinforcing device (11) in contact with a vertical surface (5b) of the strut support (3), so that the reinforcing device (10) and the strut support (3) are secured along a longitudinal axis (X).

4. Beam (10) according to the preceding claim,
**characterized in that** said first fixing means comprise five spot welds (16).

5. Beam (10) according to any one of the preceding claims,
**characterized in that** the reinforcing device is a substantially flat metal plate (11) more or less conforming to the interior dimensions and shape of the beam (10).

6. Beam (10) according to the preceding claim,
**characterized in that** the plate (11) is made from the same material and has the same thickness as the strut support (3).

7. Beam (10) according to the preceding claim,
**characterized in that** the thickness of the plate (11) is of the order of 1.8 mm.

8. Beam (10) according to any one of the preceding claims,
**characterized in that** it constitutes a rear beam of the motor vehicle.

9. Beam according to any one of the preceding claims,
**characterized in that** it constitutes a front beam of the motor vehicle.

10. Motor vehicle comprising at least one beam (10) according to any one of the preceding claims.
